# NEUE EUROPÄISCHE PATENTSCHRIFT

(11) **EP 1 727 864 B2**
(45) Veröffentlichungstag und Bekanntmachung des Hinweises auf die Entscheidung über den Einspruch: **22.01.2014**
(45) Hinweis auf die Patenterteilung: 25.07.2007
(21) Anmeldenummer: 05776314.6
(22) Anmeldetag: 19.08.2005
(51) Int. Cl.: C09C 1/00

(54) **SIO2 BESCHICHTETE PERLGLANZPIGMENTE**
SIO2 COATED PEARLESCENT PIGMENTS
PIGMENTS NACRES PRESENTANT UN REVETEMENT DE SIO2

(30) Priorität: 26.08.2004 DE 102004041592
(43) Veröffentlichungstag der Anmeldung: 06.12.2006
(73) Patentinhaber: Eckart GmbH, 91235 Hartenstein (DE)
(72) Erfinder: HENGLEIN, Frank, 90409 Nürrnberg (DE); SCHMIDT, Ulrich, 91217 Hersbruck (DE)
(74) Vertreter: Walcher, Armin
(86) Internationale Anmeldenummer: PCT/EP2005/009012
(87) Internationale Veröffentlichungsnummer: WO 2006/021388

(56) Entgegenhaltungen:
- EP-A- 0 634 459
- EP-A- 1 084 198
- EP-A- 1 203 795
- EP-A1- 1 203 794
- EP-A2- 0 757 085
- WO-A-2004/092284
- WO-A-2005/063897
- WO-A1-98/13426
- WO-A1-03/095564
- DE-C2- 2 106 613
- JP-A- S6 183 258
- JP-A- H09 104 833

## Beschreibung

Die Erfindung betrifft Perlglanzpigmente mit Metalloxid-haltigem, plättchenförmigen Substrat und Schutzschicht, wobei das Metalloxid einen Brechungsindex von größer als 1,8 hat. Des weiteren betrifft die Erfindung Verfahren zur Herstellung solcher Perlglanzpigmente als auch die Verwendung derselben.

Perlglanzpigmente, die Titandioxid in der Deckschicht enthalten bzw. die aus partikelförmigem TiO₂ aufgebaut sind, besitzen eine gewisse photokatalytische Aktivität. Wirkt nun UV-Licht in Gegenwart von Wasser und Sauerstoff auf ein Perlglanzpigment ein, so kann die UV-Aktivität des Perlglanzpigments einen beschleunigten Abbau von organischen Verbindungen, z. B. einer Bindemittelmatrix, auslösen. Bereits der im Tageslicht enthaltene UV-Anteil kann diese Reaktion bedingen, d.h. für Applikationen wie Automobillackierungen, die der Witterung direkt ausgesetzt sind, müssen besonders stabilisierte Perlglanzpigmente eingesetzt werden. Um diesem für die Außenanwendung nachteiligen Effekt entgegenzuwirken, können Perlglanzpigmente zur Verminderung der Photoaktivität mit verschiedenen Schutzbeschichtungen ausgestattet werden. Üblicherweise werden dabei ausgehend von wässrigen Metallsalzlösungen schwerlösliche Verbindungen auf die Oberfläche der Pigmente gefällt, wobei neben Sauerstoffverbindungen des Aluminiums oder des Siliziums in der Regel mindestens ein Übergangsmetall, wie z.B. Zirkonium, Mangan, Cer oder Chrom, an der Schutzbeschichtung beteiligt ist. Um die Kompatibilität der Pigmente zu unterschiedlichen Lacken, insbesondere aber zu den besser umweltverträglichen wasserbasierenden Systemen, zu fördern, wird in der Regel noch eine zusätzliche organische Modifizierung der Deckschicht, z.B. mittels Silanen, aufgebracht.

Die DE 2106613 beschreibt Perlglanzpigmente, die direkt im Anschluss an die Metalloxidbelegung der Glimmerschuppen in wässriger Phase mit einer Kieselsäureschicht überzogen und nachfolgend kalziniert werden. Das Ziel ist hierbei, die optischen Eigenschaften der Pigmente wie Glanz, Transparenz und Farbe positiv zu beeinflussen. Diese Pigmente sind jedoch nicht ausreichend gegenüber UV-Licht stabilisiert.

Die EP 0446986B1 betrifft Perlglanzpigmente für Lackanwendungen, die durch eine glatte, geschlossene Aluminiumoxid-Hydratschicht eine annehmbare Licht- und Feuchtigkeitsbeständigkeit besitzen. Unter Verwendung von sauren oder alkalischen Aluminiumsalzen werden Perlglanzpigmente in wässriger Phase unter kontrollierten Bedingungen beschichtet und anschließend getrocknet.

Gemäß der Lehre der EP 632109 wird eine dreischichtige Schutzschicht auf ein mit Metalloxiden belegtes plättchenförmiges Substrat aufgebracht. In einer 1. Stufe wird SiO₂, in einer 2. Stufe wird ein Hydroxid oder Oxid-Hydrat von Cer, Aluminium oder Zirkonium und in einer 3. Stufe werden mindestens ein Hydroxid oder Oxid-Hydrat von Cer, Aluminium oder Zirkonium sowie ein organisches Kupplungsreagenz aufgebracht. Dieser dreischichtige Aufbau ist nachteiligerweise sehr aufwendig und entsprechend kostenintensiv bei der Herstellung. Darüber hinaus müssen die Kupplungsreagenzien vor der Bindung an die Pigmentoberfläche hydrolysiert werden, wobei gemäß der Lehre der EP 0 888 410 B1 nur maximal 60 % der zugesetzten Kupplungsreagenzien an die Pigmentoberfläche gebunden werden können.

Die EP 0 888 410 B1 offenbart modifizierte Perlglanzpigmente auf der Basis eines mit Metalloxiden beschichteten, plättchenförmigen Substrates. Gemäß der Lehre der EP 0 888 410 B1 besteht die Deckschicht aus mindestens zwei Oxiden, gemischten Oxiden oder Mischoxiden von Siliciumdioxid, Aluminumoxid, Ceroxid, Titandioxid oder Zirkoniumdioxid und einem wasserbasierenden oligomeren Silansystem. Der Aufbau der Deckschicht ist mithin ebenfalls sehr kompliziert und entsprechend aufwendig in der Herstellung.

Bei dem vorgenannten Stand der Technik wird die UV-Aktivität der hochbrechenden TiO₂-Schicht in der Regel durch mindestens zwei verschiedene Oxidschichten oder eine Mischschicht zweier Oxide unterdrückt. Sehr häufig werden ferner Schwermetalle wie beispielsweise Zirkonium, oder Cer verwendet, die potenziell toxische Eigenschaften besitzen. Ältere Verfahren verwenden auch chromhaltige Beschichtungen. Die Verwendung verschiedener Oxide beeinträchtigt darüber hinaus auch die optischen Eigenschaften, insbesondere den Glanz. Auch sind diese relativ komplexen Schichtsysteme aus mehreren Oxiden oder Mischoxiden aufwendig herzustellen. Für die Fällung jedes Metallhydroxids gibt es einen optimalen pH-Bereich. Mischfällungen verschiedener Hydroxide finden daher meist bei pH-Werten statt, die einen Kompromiß der für die Fällung der reinen Hydroxide optimalen Werte darstellen. Daher sind i.d.R. keine Fällungsreaktionen möglich, bei denen die Bedingungen für die Fällung aller beteiligten anorganischer Komponenten jeweils optimal eingestellt sind. Durch den Einsatz von Metallsalzen und der Notwendigkeit, durch Zudosieren von Laugen oder Mineralsäuren bestimmte pH-Werte einzuhalten, entstehen als Abfallprodukte nachteiligerweise viele Mineralsalze.

In der EP 1 084 198 B1 sind Effektpigmente beschrieben, die aufgrund ihrer Oberflächenmodifizierung mit reaktiven Orientierungsmitteln, sehr gute Haftfestigkeiten zum Basislack aufweisen. Die EP 1 084 198 B1 offenbart jedoch keine Wetter- und UV-stabilen Perlglanzpigmente.

Aufgabe der Erfindung ist es, Metalloxid-haltige Perlglanzpigmente mit einer einfach aufgebauten und wirksamen Schutzschicht bereitzustellen. Die Schutzschicht soll insbesondere einen effizienten Schutz gegenüber einer durch UV-Licht induzierten photokatalytischen Aktivität des Perlglanzpigmentes geben, ohne die optischen Eigenschaften wie Glanz wesentlich zu beeinträchtigen. Die erfindungsgemäß beschichteten Perlglanzpigmente sollen darüber hinaus gute Wetterstabilität aufweisen.

Eine weitere Aufgabe ist es, ein einfaches Verfahren zur Herstellung von Metalloxidhaltigen Perlglanzpigmenten mit einer Schutzschicht bereitzustellen.

Die der Erfindung zugrundeliegende Aufgabe wird durch Bereitstellung eines Perlglanzpigmentes mit Metalloxid-haltigem, plättchenförmigen Substrat und Schutzschicht gemäß Anspruch 1 gelöst.

Bevorzugte Weiterbildungen sind in den Unteransprüchen 2 bis 12 angegeben.

Unter Metalloxid-haltigem, plättchenförmigen Substrat werden im Sinne der Erfindung insbesondere Metalloxid-haltige Perlglanzpigmente, beispielsweise mit Metalloxiden beschichtete Glimmerplättchen, verstanden.

Die organisch-chemische Oberflächenmodifizierung liegt vorzugsweise nicht als Mischschicht mit der SiO₂-Beschichtung vor. Das heißt, bei der Herstellung der Schutzschicht wurde auf dem Effektpigment zunächst SiO₂ und nachfolgend die organisch-chemische Oberflächenmodifizierung aufgebracht.

Gemäß der vorliegenden Erfindung wird ein witterungs- und UV-beständiges Perlglanzpigment bereitgestellt, welches eine SiO₂-Beschichtung ohne Schwermetallanteil aufweist. Die organisch-chemische Oberflächenbehandlung kann äußerst vorteilhaft in einfacher Weise durchgeführt werden und umfasst eine große Vielfalt an Oberflächenmodifizierungsmitteln. Aufgrund der Vielzahl an verwendbaren Oberflächenmodifizierungsmitteln kann das erfindungsgemäße Pigment für verschiedenste Lacksysteme kompatibel gestaltet werden. Die optischen Eigenschaften wie Glanz sind sehr gut, obwohl bei der erfindungsgemäßen Nachbeschichtung vorzugsweise keine Metalloxide, -hydroxide bzw. -oxidhydrate mit hohem Brechungsindex in der SiO₂-Schicht oder auf der SiO₂-Schicht Verwendung finden.

Erfindungsgemäß wird ein Pigment, das eine reduzierte verbesserte UV-Stabilität und eine optimierte Kompatibilität zu handelsüblichen Lacksystemen aufweist, im Folgenden als "wetterstabil" oder "witterungsstabil" bezeichnet.

Das erfindungsgemäße Effektpigment enthält in der SiO₂-Schutzschicht vorzugsweise keine Metalle, Metallverbindungen oder Metalloxide der Elemente Ce, Al, Zr, Sn, Zn, Mn, Co, Cr, Mo, Sb und/oder B. Das heißt, die SiO₂-Schutzschicht besteht vorzugsweise ausschließlich aus SiO₂, und das erfindungsgemäße Effektpigment enthält bevorzugt keine Oxidschichten, Hydroxidschichten und/oder keine Oxidhydratschichten der vorgenannten Elemente.

In der SiO₂-Schicht können neben SiO₂ auch Hydroxide und/oder Oxidhydrate des Siliziums enthalten sein.

Im Unterschied zu den Pigmenten, die nach den in den oben zitierten Schriften beschriebenen wasserbasierenden Beschichtungsverfahren mit mindestens zwei verschiedenen Oxiden erhalten werden, weisen die erfindungsgemäß beschichteten Pigmente lediglich eine Schutzschicht aus SiO₂ auf. Es wurde völlig überraschend festgestellt, daß mit lediglich einer Schutzschicht aus SiO₂ versehene Pigmente - insbesondere in wasserbasierenden Lacksystemen - eine ausgezeichnete Wetterbeständigkeit und UV-Stabilität aufweisen. Bei der Herstellung der erfindungsgemäßen Pigmente verlaufen die Reaktionen zudem nahezu quantitativ, so dass die Aufarbeitung, insbesondere aber die Isolation des Produkts durch Filtration, in keinerlei Weise eingeschränkt wird.

Ferner wird die Aufgabe gelöst durch ein Verfahren zur Herstellung der erfindungsgemäßen Perlglanzpigmente, welches folgende Schritte umfasst:
(a) Suspendieren von Metalloxid-haltigem, plättchenförmigen Substrat in einer Flüssigphase, wobei das Metalloxid einen Brechungsindex von größer als 1,8 aufweist,
(b) Aufbringen einer SiO₂-Schicht auf das plättchenförmige Substrat,
(c) Modifizieren der Oberfläche der SiO₂-Schicht mit Silanen.

Bevorzugte Weiterbildungen des erfindungsgemäßen Verfahrens sind in den Ansprüchen 14 bis 21 angegeben.

Bevorzugt wird hierbei Schritt (c) mit mehreren organofunktionellen Silanen in einer Flüssigphase mit einem überwiegenden Anteil an organischem Lösemittel durchgeführt. Dabei ist es äußerst vorteilhaft, daß viele Additive, insbesondere hydrophobe Silane, in überwiegend organischen Lösemitteln sehr gut lösbar sind. Dadurch ist eine einfache Prozessführung und eine große Variabilität in der Wahl der Oberflächenmodifizierungsmittel gegeben.

Überraschenderweise wurde nun gefunden, daß eine ausgezeichnete UV- und Wetterstabilität von Perlglanzpigmenten bereits mit nur einer einzigen SiO₂-Schicht sowie einer nachfolgend aufgebrachten organisch chemischen Oberflächenmodifizierung erreicht werden kann. Trotz des niedrigen Brechungsindex von SiO₂ weisen die damit beschichteten Perlglanzpigmente einen sehr guten Glanz auf. Des weiteren wurde überraschend festgestellt, daß sich bereits durch dünne SiO₂-Schichtdicken mit nachfolgender organisch-chemischer Modifizierung eine hohe UV-Stabilität erzielen lässt.

Wetterstabile Perlglanzpigmente weisen vorzugsweise SiO₂-Schichten in einem Anteil von 0,5 bis 10 Gew.-% des Pigmentes, bevorzugt von 1 bis 7 Gew.-%, beispielsweise von mehr als 1,5 Gew.-% bis 7 Gew.-%, weiter bevorzugt von 1,6 Gew.-% bis 6 Gew.-%, und besonders bevorzugt von 2 bis 5 Gew.-%. Die Angabe Gew.-% bezieht sich dabei jeweils auf das Gesamtgewicht des Pigmentes.

Im Einzelfall kann die SiO₂-Menge von der Feinheit und damit einhergehend der spezifischen Oberfläche des Perlglanzpigmentes sowie von der Schichtdicke der Metalloxidbeschichtung, vorzugsweise der TiO₂-Schicht, abhängen. Feinere Pigmente und dickere TiO₂-Schichten können auch einen höheren SiO₂-Gehalt erfordern. Oberhalb von 10 Gew.-% SiO₂ beobachtet man im Allgemeinen keinerlei weitere Verbesserung der Wetter- und UV-Stabilität. Oft werden die Eigenschaften sogar schlechter, vermutlich da die dickeren Schutzschichten spröde und/oder brüchig sein können und leichter Risse entstehen, so dass die Barrierewirkung der Schicht vermindert wird. Unterhalb von 0,5 Gew.-% ist die schützende Wirkung der SiO₂-Schicht im Allgemeinen zu gering.

Die überraschend hohe Wirksamkeit einer lediglich aus Silikat aufgebauten Beschichtung zur UV-Stabilisierung von Perlglanzpigmenten ist vermutlich unter anderem auf die elektronische Natur der SiO₂-Schicht zurückzuführen. Es wird vermutet, daß die energetische Lage der Bandkanten von SiO₂ im Vergleich zu jener des TiO₂ im vorzugsweise verwendeten TiO₂-beschichteten Perlglanzpigment derart günstig ist, daß der Transfer insbesondere von Elektronen-Löchern, aber auch von Elektronen, die nach Absorption von UV-Photonen im Halbleiter TiO₂ entstehen, an die Grenzfläche des Pigmentes wirksam unterdrückt wird ("Diodeneffekt"). Dies erscheint plausibel, da eine wirksame UV-Stabilisierung von Perlglanzpigmenten bereits bei äußerst dünnen SiO₂-Schichtdicken von umgerechnet nur ca. 2 bis 3 nm zu beobachten ist. Neben einem elektronischen Effekt ist vermutlich auch ein gewisser Barriereeffekt für die UV-Stabilisierung maßgeblich. Hier wird unter anderem Wasser von der TiO₂-Grenzfläche ferngehalten. Aufgrund der geringen Schichtdicken ist dieser Effekt vermutlich jedoch nicht ausschlaggebend. Die Schichtdicke der SiO₂-Schichten liegen vorzugsweise in einem Bereich von 2 nm bis 20 nm, weiter bevorzugt von 2,5 nm bis 7 nm.

Bei den erfindungsgemäßen Perlglanzpigmenten ist die SiO₂-Schutzschicht zusätzlich organisch-chemisch oberflächenmodifiziert, um dem Pigment Kompatibilität zum Bindemittel des Lacksystems zu ermöglichen. Die organisch-chemische Oberflächenmodifizierung erfolgt durch mehrere organofunktionelle Silane.

Diese Oberflächenmodifizierungsmittel können vor dem Aufbringen auf die SiO₂-Schicht in monomerer, oligomerer oder polymerer Form vorliegen.

Bevorzugt jedoch liegen die Oberflächenmodifizierungsmittel vor dem Aufbringen auf die SiO₂-Schicht in monomerer Form vor, da auf diese Weise die Silane auf der Oberfläche geordneter und damit vermutlich dichter gepackt sind. Weiterhin bevorzugt werden als organisch-chemische Oberflächenmodifizierungsmittel organofunktionelle Silane verwendet. Diese besitzen naturgemäß eine ausgeprägte Kondensationsneigung und damit Bindungsfähigkeit an eine SiO₂-Oberfläche. Die SiO₂-Oberfläche ist mit Silanolgruppen (Si-O-H) terminiert, die aufgrund ihrer chemischen Ähnlichkeit zu organofunktionellen Silanolen beste Anbindungsmöglichkeiten für diese Oberflächenmodifizierungsmittel liefern.

Unter einer funktionellen Bindungsgruppe ist hier eine funktionelle Gruppe zu verstehen, die eine chemische Wechselwirkung zum Bindemittel einzugehen vermag. Die chemische Wechselwirkung mag dabei aus einer kovalenten Bindung, einer Wasserstoffbrückenbindung oder einer ionischen Wechselwirkung usw. bestehen.

Die funktionellen Bindungsgruppen umfassen beispielsweise Acrylat-, Methacrylat-, Vinyl-, Amino-, Cyanat-, Isocyanat-, Epoxy-, Hydroxy- Thiol-, Ureido- und/oder Carboxylgruppen.

Die Wahl einer geeigneten funktionellen Gruppe hängt von der chemischen Natur des Bindemittels ab. Bevorzugt wählt man eine den Funktionalitäten des Bindemittels chemisch kompatible funktionelle Gruppe, um eine gute Anbindung zu ermöglichen. Diese Eigenschaft ist im Hinblick auf wetterstabile Perlglanzpigmente sehr wichtig, da auf diese Weise eine genügend große Haftfestigkeit zwischen Pigment und ausgehärtetem Bindemittel gegeben ist. Dies ist beispielsweise in Haftprüfungstests wie dem Gitterschnitttest bei Schwitzwassertestbelastungen gemäß der DIN 50 017 nachzuprüfen. Das Bestehen eines derartigen Testes stellt eine notwendige Bedingung für die Verwendung von wetterstabilen Perlglanzpigmenten im Automobillack dar.

Als Oberflächenmodifizierungsmittel geeignete organofunktionelle Silane mit entsprechenden funktionellen Gruppen sind kommerziell verfügbar. Beispielsweise sind dies viele Vertreter der von der Fa. Degussa, Rheinfelden hergestellten und unter dem Handelsnamen "Dynasylan®" vertriebenen Produkte bzw. der von der Fa. OSi Specialties vertriebenen Silquest®-Silane oder der von der Fa. Wacker vertriebenen Organosilane, beispielsweise der Standard- und α-Silane aus der GENIOSIL®-Produktgruppe.
Beispiele hierfür sind 3-Methacryloxypropyltrimethoxysilan (Dynasylan MEMO, Silquest A-174NT), Vinyltri(m)ethoxysilan (Dynasylan VTMO bzw. VTEO, Silquest A-151 bzw. A-171), 3-Mercaptopropyltri(m)ethoxysilan (Dynasylan MTMO oder 3201; Silquest A-189), 3-Glycidoxypropyltrimethoxysilan (Dynasylan GLYMO, Silquest A-187), tris-(3-Trimethoxysilylpropyl)isocyanurat (Silquest Y-11597), gamma-Mercaptopropyltrimethoxysilan (Silquest A-189), Bis-(3-Triethoxysilylpropyl)polysulfid (Silquest A-1289), Bis-(3-Triethoxysilyl)disulfid (Silquest A-1589), beta-(3,4-Epoxycyclohexyl)ethyltrimethoxysilan (Silquest A-186), Bis(triethoxysilyl)ethan (Silquest Y-9805), gamma-Isocyanatopropyltrimethoxysilan (Silquest A-Link 35, GENIOSIL GF40), (Methacryloxymethyl)tri(m)ethoxysilan (GENIOSIL XL 33, XL 36), (Methacryloxymethyl)(m)ethyldimethoxysilan (GENIOSIL XL 32, XL 34), Isocyanatomethyl)trimethoxysilan (GENIOSIL XL 43), (Isocyanatomethyl)methyldimethoxysilan (GENIOSIL XL 42), (Isocyanatomethyl)trimethoxysilan (GENIOSIL XL 43) 3-(Triethoxysilyl)propylbernsteinsäureanhydrid (GENIOSIL GF 20).

Bei einer bevorzugten Ausführungsform enthält das die SiO₂-Schicht modifizierende organofunktionelle Silan oder Silangemisch wenigstens ein aminofunktionelles Silan. Die Aminofunktion ist eine funktionelle Gruppe, die mit den meisten in Bindemitteln vorhandenen Gruppen eine oder mehrere chemische Wechselwirkungen eingehen kann. Dies kann eine kovalente Bindung, wie z.B. mit Isocyanatfunktionen des Bindemittels, oder Wasserstoffbrückenbindungen wie mit OH- oder COOH-Funktionen oder auch ionische Wechselwirkungen beinhalten. Eine Aminofunktion ist daher für den Zweck der chemischen Anbindung des Effektpigmentes an verschiedenartige Bindemittel sehr gut geeignet.

Bevorzugt werden hierzu folgende Verbindungen genommen: Aminopropyltrimethoxysilan (Dynasylan AMMO; Silquest A-1110), Aminopropyltriethoxysilan (Dynasylan AMEO) oder N-(2-Aminoethyl)-3-aminopropyltrimethoxysilan (Dynasylan DAMO, Silquest A-1120) oder N-(2-Aminoethyl)-3-aminopropyltriethoxysilan, Triamino-funktionelles Trimethoxysilan (Silquest A-1130), bis-(gamma-Trimethoxysilylpropyl)amin (Silquest A-1170), N-ethylgamma-aminoisobutyltrimethoxysilan (Silquest A-Link 15), N-Phenyl-gammaaminopropyltrimethoxysilan (Silquest Y-9669), 4-Amino-3,3-dimethylbutyltrimethoxysilan (Silquest Y-11637), N-Cyclohexylaminomethylmethyldiethoxysilan (GENIOSIL XL 924), (N-Cyclohexylaminomethyl)triethoxysilan (GENIOSIL XL 926), (N-Phenylaminomethyl)trimethoxysilan (GENIOSIL XL 973).

Überraschenderweise wurden weitere vorteilhafte anwendungstechnische Eigenschaften erhalten durch eine organisch-chemische Oberflächenmodifizierung der SiO₂-Schicht, die aus ein von Silan mit wenigstens einer funktionellen Bindungsgruppe und aus ein von Silan ohne funktionelle Bindungsgruppe Besteht.
Hierbei ist besonders bevorzugt jenes Silan mit wenigstens einer funktionellen Bindungsgruppe, wie vorstehend beschrieben, ein Aminosilan.

Bei einer weiterhin besonders bevorzugten Ausführungsform ist jenes Silan ohne funktionelle Bindungsgruppe, wie vorstehend beschrieben, ein Alkylsilan. Das Alkylsilan weist vorzugsweise die Formel (I) auf:

R_{(4-z)}Si(X)_{z} (I)

Hierbei ist z eine ganze Zahl von 1 bis 3, R ist eine substituierte oder unsubstituierte, unverzweigte oder verzweigte Alkylkette mit 10 bis 22 C-Atomen und X steht für eine Halogen- und/oder Alkoxygruppe. Bevorzugt sind Alkylsilane mit Alkylketten mit mindestens 12 C-Atomen. R kann auch zyklisch mit Si verbunden sein, wobei in diesem Fall z üblicherweise 2 ist.

Ein derartiges Silan bewirkt eine starke Hydrophobierung der Pigmentoberfläche. Diese wiederum führt dazu, daß das derart beschichtete Perlglanzpigment in der Lackbeschichtung tendenziell nach oben aufschwimmt. Bei plättchenförmigen Effektpigmenten wird ein derartiges Verhalten als "leafing"-Verhalten bezeichnet.

Völlig überraschend wurde nun gefunden, daß eine Silanmischung, bestehend aus einem Silan, welches eine funktionelle Gruppe besitzt, die eine Anbindung an das Bindemittel ermöglicht, und einem wie oben beschriebenen, in Wasser unlöslichen oder schlecht löslichen Alkylsilan ohne Aminogruppe optimale anwendungstechnische Eigenschaften der Perlglanzpigmente ermöglicht.

Die Perlglanzpigmente sind derart gut an den Lack gebunden, daß kein Verlust der Haftfestigkeit auftritt. Andererseits zeigen die Pigmente eine hervorragende planparallele Orientierung im Lack sowie ein "Rest-leafing" Verhalten, d.h. ein statistisch messbarer Teil der Pigmente befindet sich im oberen Bereich des ausgehärteten Basislackes in der Nähe zum Klarlack. Normalerweise führt eine Anordnung der Pigmente an der oberen Grenzfläche des Basislackes zu einem Verlust der Haftungseigenschaften, da das Perlglanzpigment aufgrund seiner plättchenförmigen Struktur als störende Barriere zwischen Klarlack und Basislack wirkt. Bei der vorliegenden Erfindung ordnen sich die Pigmente überraschenderweise nicht an der oberen Grenzfläche des Basislackes, sondern nur in der Nähe der oberen Grenzfläche des Basislackes an, wodurch eine zuverlässige Anbindung des Klarlackes an den Basislack möglich ist. Das heißt, die erfindungsgemäßen Pigmente wirken vorteilhafterweise nicht als störende Barriere zwischen Klar- und Basislack.

Dieses "Rest-leafing" Verhalten und die sehr gute planparallele Orientierung bewirken verbesserte Glanzeigenschaften und eine hohe Farbtonreinheit der erfindungsgemäßen Perlglanzpigmente, beispielsweise in einer Lackierung.

Bei einer Kettenlänge der Alkylsilane unter 10 C-Atomen ist die Hydrophobierung der Oberfläche nicht ausreichend, um derartige Effekte zu zeigen. Vermutlich können sich hier keine Segmente an der Pigmentoberfläche ausbilden, bei denen die Alkylketten parallel zueinander im Sinne einer "self-assembly monolayer" Schicht angeordnet sind. Derartige Schichten erhält man bevorzugt, wenn man eine Oberfläche mit Additiven belegt, welche eine Haftgruppe zur Oberfläche und Alkylketten mit mindestens 10 C-Atomen aufweisen.
Besitzen die Silane mehr als 22 C-Atome ist i.d.R. die Anbindung an das Bindemittelsystem durch das Silan mit funktionellen Anbindungsgruppen nicht mehr wirksam genug, d.h., bei einer Lackapplikation beobachtet man häufig Haftungsprobleme im Schwitzwassertest nach DIN 50 017.

Bei einer weiteren bevorzugten Ausführungsform enthält die Oberflächenmodifizierung ein Silan der Strukturformel (II)

(R¹-X-[A-Y]ₙ-B)_{(4-z)}Si(OR²)_{z} (II)

wobei
- n = 1 bis 100 ist,
- z für eine ganze Zahl von 1 bis 3 steht,
- R¹ für gerad- oder verzweigtkettiges Alkyl mit 1 bis 12 Kohlenstoffatomen, das mit Halogenen substituiert sein kann; Aryl mit 6 bis 12 C-Atomen; oder Aryl mit 6 bis 12 C-Atomen, das mit Alkyl mit 1 bis 6 Kohlenstoffatomen und/oder mit Halogenen substituiert sein kann; steht,
- R² für gerad- oder verzweigtkettiges Alkyl mit 1 bis 6 Kohlenstoffatomen steht,
- A und B unabhängig voneinander für eine zweiwertige Gruppe, die aus gerad- oder verzweigtkettigem Alkylen mit 1 bis 12 Kohlenstoffatomen; Arylen mit 6 bis 12 C-Atomen; oder Arylen mit 6 bis 12 C-Atomen, das mit Alkyl mit 1 bis 6 Kohlenstoffatomen und/oder mit Halogenen substituiert sein kann; besteht, stehen,
- X und Y unabhängig voneinander für O oder S stehen.
Als Halogen wird hier F, Cl, Br und/oder J verstanden.

Bei bevorzugten Ausführungsformen stehen R¹ und R² unabhängig voneinander aus Methyl, Ethyl, n-Propyl, iso-Propyl, n-Butyl, iso-Butyl, tert.-Butyl, Phenyl, Biphenyl, Naphthyl oder Mischungen davon.

Bei weiterhin bevorzugten Ausführungsformen bestehen A und B unabhängig voneinander aus Ethylen, Propylen, 1-Butylen, 2-Butylen, Phenylen, Phenylen, das mit Alkyl mit 1 bis 6 C-Atomen substituiert ist, und Mischungen davon.

Diese Silane können in reiner Form mit definiertem n vorliegen.

Gemäß einer bevorzugten Ausführungsform liegt n in einem Bereich von 1 bis 20, weiter bevorzugt von 5 bis 15.

Bei einer besonders bevorzugten Ausführungsform enthält die Oberflächenmodifizierung ein Silan der Formel (III)

H₃CO-[CH₂-CH₂-O-]ₙCH₂-CH₂-Si(OR²)₃, (III)

wobei n = 1 bis 100, vorzugsweise 1 bis 20, weiter bevorzugt 5 bis 25, ist, und R² die gleiche Bedeutung wie oben angegeben hat. Besonders bevorzugt ist R² unabhängig voneinander Methyl oder Ethyl.

Auch diese Silane können in reiner Form mit einem definierten n vorliegen. Derartige Silane haben aufgrund ihrer Oxyethylengruppe(n) innerhalb der Kette besonders gute Benetzungs- und Dispergiereigenschaften. Erhältlich sind derartige Silane beispielsweise von der Firma OSi Specialities unter dem Produktnamen Silquest^{®} A-1230.

Die Menge der als Oberflächenmodifizierungsmittel aufgebrachten Silane in bezug auf das gesamte SiO₂ nachbeschichtete Perlglanzpigment beträgt vorzugsweise 0,1 bis 6 Gew.-%, weiter vorzugsweise 0,2 bis 5 Gew.-%, bevorzugt 0,3 bis 3 Gew.-% und besonders bevorzugt 0,5 bis 2,5 Gew.-%. Im Einzelfall kann auch hier die Menge von der Feinheit und spezifischen Oberfläche des Perlglanzpigmentes abhängen. Generell ist jedoch bereits eine Menge in der Größenordung einer oder weniger Silanmonolage(n) auf der Pigmentoberfläche ausreichend. Zu kleine Mengen führen zu keiner ausreichenden Belegung der Pigmentoberfläche und in der Folge zu schlechten Schwitzwassertestergebnissen in Lackapplikationen (Test nach DIN 50 017).

Das Mischungsverhältnis der wenigstens eine funktionelle Bindungsgruppe enthaltenden und der keine funktionelle Bindungsgruppe enthaltenden Silane zueinander beträgt (bezogen auf Gewichtsverhältnisse) vorzugsweise 1: 5 bis 5:1, weiter bevorzugt 1:3 bis 3:1 und besonders bevorzugt 1:2 bis 2:1. Enthält die Silanmischung insgesamt zu wenig funktionelle Bindungsgruppen, so wird die Oberflächenmodifizierung zu hydrophob. In der Lackapplikation kann dies bei einem Belastungstest wie der Schwitzwasserprüfung nach DIN 50 017 zu Haftungsprobleme führen. Bei einem Überschuss an funktionellen Bindungsgruppen hingegen ist die Oberfläche zu hydrophil und das Anpastungsverhalten des Pigmentes in einem Wasserlack sowie die Orientierung der Perlglanzpigmente in der ausgehärteten Lackapplikation ist schlechter. In der Schwitzwasserprüfung begünstigt eine zu ausgeprägte Hydrophilie des Pigments die Einlagerung von Wasser in die Lackschicht, was vor allem eine verminderte Abbildungsschärfe (DOI) sowie die Bildung von mikrofeinen Wasserblasen zur Folge haben kann.

Als plättchenförmiges Substrat, welches erfindungsgemäß mit der Schutzschicht versehen wird, werden folgende Substrate verwendet:
- TiO₂ und/oder Eisenoxid beschichtete Glimmerplättchen,
- TiO₂ und/oder Eisenoxid beschichtete Glasplättchen,
- TiO₂ und/oder Eisenoxid beschichtete Aluminiumoxidplättchen,
- TiO₂ und/oder Eisenoxid beschichtete SiO₂-Plättchen,
- Bismutoxychloridplättchen,
- reine TiO₂-Plättchen
sowie Mischungen all dieser Substrate.

Der Brechungsindex der Metalloxidschicht ist, um einen guten Perlglanzeffekt zu ergeben, größer 1,8, bevorzugt, größer als 2,2, noch bevorzugt größer als 2,3 und besonders bevorzugt größer als 2,4, noch mehr bevorzugt von 2,5 oder größer.

Bevorzugt finden mit TiO₂ beschichtete Substrate Verwendung. Mit TiO₂ und / oder Eisenoxid beschichtete Glimmerpigmente sind beispielsweise unter dem Namen PHOENIX® (Fa. Eckart) im Handel erhältlich. Mit TiO₂ und/oder Fe₂O₃ beschichtete Al₂O₃-Flakes werden unter dem Handelsnamen Xirallic^{®} und entsprechend beschichtete SiO₂-Flakes unter dem Handelsnamen Colorstream^{®} von der Fa. Merck, Deutschland, angeboten. Mit TiO₂ und / oder Eisenoxid beschichtete Glasflakes werden z.B. von der Fa. Engelhard, USA, unter der Bezeichnung Firemist^{®} angeboten.

Ein Verfahren zur Bereitstellung eines erfindungsgemäßen Perlglanzpigmentes umfasst die folgenden Schritte:
(a) Suspendieren von Metalloxid-haltigem, plättchenförmigen Substrat in einer Flüssigphase, wobei das Metalloxid einen Brechungsindex von größer als 1,8 aufweist,
(b) Aufbringen einer SiO₂-Schicht auf das plättchenförmige Substrat,
(c) Modifizieren der Oberfläche der SiO₂-Schicht mit Silanen.

Das Verfahren zur Herstellung dieser Perlglanzpigmente ist äußerst vorteilhaft kostengünstig und erlaubt eine Beschichtung in einem Schritt.

Hierbei wird in einem bevorzugten Verfahren die SiO₂-Schicht durch ein Sol-Gel-Verfahren in überwiegend organischem Lösemittelgemisch aufgebracht. Die Schritte (a) und (b) des erfindungsgemäßen Verfahrens werden zweckmäßigerweise im gleichen Flüssigmedium durchgeführt. Besonders bevorzugt werden die Schritte (a) und (b) in dem gleichen überwiegend organischen Lösemittelgemischdurchgeführt, in dem anschließend in Schritt c) die Oberflächenmodifizierung erfolgt.

Das hier beschriebene Eintopfverfahren zeichnet sich dadurch aus, daß die Oberflächenadditive (z.B. Silane) unmittelbar im Anschluß an die SiO₂-Schichtfällung zur Reaktionslösung zugegeben werden und somit - in situ - hydrolysieren und schließlich durch Kondensationsreaktion mit Hydroxylgruppen der SiO₂-Schicht kovalent an der Oberfläche anbinden können. Dadurch ist eine äußerst einfache Prozeßführung bei gleichzeitig sehr guter Auswahl an einsetzbaren Silanen gegeben.

Bei diesem Verfahren wird in Schritt (b) die SiO₂-Schicht unter Verwendung von vorzugsweise Tetraalkoxysilan und optionaler Zugabe von Wasser sowie optionaler Zugabe von Base aufgebracht. Derartige Sol-Gel-Prozesse, die in einem überwiegend organischem Lösemittelgemisch durchgeführt werden, haben gegenüber der SiO₂-Abscheidung ausgehend von wässrigen Silikatlösungen, wie sie im Stand der Technik beschrieben wurden, eine Reihe von Vorteilen. Zum einen handelt es sich hierbei um ein weitgehend salzfreies Verfahren. Moderne Bindemittelsysteme sind sehr empfindlich in bezug auf die Anwesenheit von Salzen. Diese stören beispielsweise die kolloidale Stabilität von Bindemittelteilchen und können somit eine unkontrollierte Koagulation des Bindemittelsystems eines Lackes bedingen. Dadurch wird der Lack unbrauchbar. Außerdem fördern wasserlösliche Bestandteile wie Salze in Lackierungen osmotische Prozesse, so dass es durch Ansammlung von Wasser in der Lackschicht zu Blasenbildung und Enthaftungsproblemen kommen kann. Durch ein per se salzfreies Herstellungsverfahren eines Perlglanzpigmentes entfallen aufwendige Reinigungsschritte. Das heißt, die erfindungsgemäßen Pigmente weisen nach Aufschlämmung Leitfähigkeiten auf, die meist unterhalb der üblicherweise geforderten Leitfähigkeit von 150 µS/cm liegen. Als Reaktionsnebenprodukt entstehen lediglich Alkohole, die zusammen mit dem alkoholischen Lösemittel beispielsweise durch eine Destillation aufgearbeitet und recycelt werden können.

Si(OR)₄ + 2 H₂O **→** SiO₂ + 4 ROH

Gemäß einer bevorzugten Weiterbildung der Erfindung entspricht die Alkoxygruppe des Tetraalkoxysilans dem verwendeten organischen Lösemittel. Bei Hydrolyse des Tetraalkoxysilans kommt es zur Freisetzung des korrespondierenden Alkohols, beispielsweise von Methanol, Ethanol oder Propanol wenn R CH₃, C₂H₅ bzw. C₃H₇ ist. Bei Verwendung von Methanol, Ethanol bzw. Propanol als organischem Lösemittel entsteht nach der Hydrolyse mithin kein Gemisch aus verschiedenen Lösemitteln, was prozeßtechnisch einen sehr großen Vorteil im Hinblick auf die Aufarbeitung bzw. Wiederverwendung des Lösemittels darstellt.

Ein weiterer Vorteil liegt in der Verwendung einer monomeren Ausgangssubstanz zur Herstellung der SiO₂-Schicht. Beim Sol-Gel-Prozeß in organischem Lösemittel beginnt die Reaktion mit der Hydrolyse des Tetraalkoxysilans, d.h. einem molekularen Monomeren. Wässrige Silikatlösungen wie Wasserglas hingegen liegen stets schon in einer oligomeren Form vorkondensierter -O-Si-O-Einheiten vor. Der Hydrolyseschritt sowie die nachfolgende Kondensation kann daher beim erfindungsgemäß bevorzugt verwendeten Sol-Gel-Prozeß besser kontrolliert werden.

Dies wirkt sich vorteilhaft auf die Qualität und Morphologie der gebildeten Schicht aus. Vermutlich ist damit die kontrollierte Abscheidung des SiO₂ im Sol-Gel-Prozeß in überwiegend organischem Lösemittelgemisch für die hohe Qualität der Schicht und die dadurch erhaltene sehr gute Barrierwirkung verantwortlich.

Als Ausgangsverbindungen für die SiO₂-Schicht werden bevorzugt Tetraalkoxysilane verwendet. Beispiele hierfür sind: Tetramethoxysilan, Tetraethoxysilan, Tetrapropoxysilan, Tetraisopropoxysilan oder Tetrabutoxysilan oder Mischungen hieraus.

Die Katalyse des Sol-Gel-Prozesses zur SiO₂-Abscheidung findet bevorzugt in basischem Milieu statt. Als Katalysatoren werden bevorzugt stickstoffhaltige Basen verwendet. Beispiele hierfür sind Ammoniak, Hydrazin, Methylamin, Ethylamin, Triethanolamin, Dimethylamin, Diethylamin, Methylethylamin, Trimethylamin, Triethylamin, Ethylendiamin, Trimethylendiamin, Tetramethylendiamin, 1-Propylamin, 2-Propylamin, 1-Butylamin, 2- Butylamin, 1-Propylmethylamin, 2-Propylmethylamin, 1-Butylmethylamin, 2-Butylmethylamin, 1-Propylethylamin, 2-Propylethylamin, 1-Butylethylamin, 2-Butylethylamin, Piperazin und Pyridin.
Bei einem bevorzugtem Verfahren wird der Schritt (c) zur Modifizierung der SiO₂-Schicht in einer Flüssigphase mit überwiegendem Anteil an organischen Lösemittel durchgeführt. Unter einem überwiegenden Anteil an organischem Lösemittel wird hierbei ein solches Lösemittelgemisch verstanden, welches vorzugsweise weniger als 50 Gew-% Wasser enthält, d.h. mehr als 50 Gew.-% organisches Lösemittel.

Als organische Lösemittel finden beispielsweise Ether, Ester, Alkohole, Ketone, Aldehyde oder Testbenzin Verwendung.

Bevorzugt werden als überwiegend organische Lösemittelgemische alkoholische Lösemittel mit einem Alkoholanteil von 50 bis 99 Gew.-% verwendet. Bevorzugt liegt der Alkoholanteil bei 60 bis 95 Gew.-% und besonders bevorzugt bei 70 bis 90 Gew.-%. Unterhalb eines Alkoholanteils von 50 Gew.-% können die anwendungstechnischen Eigenschaften der beschichteten Perlglanzpigmente beeinträchtigt werden. Dies kann beispielsweise bei einer Beschichtung einen Glanzverlustbedingen. Oberhalb von 99 Gew.-% schließlich enthält das Reaktionsgemisch offenbar zu wenig Wasser,was zu einer verzögerten Hydrolyse der Alkoxysilane führt, wodurch die Reaktionszeit zu lang wird.

Als Alkohole selbst kommen beispielsweise Methanol, Ethanol, n-Propanol, iso-Propanol, n-Butanol, 2-Methylpropanol, 2-Methoxypropanol, Butylglycol, etc. in Frage. Möglich sind auch Mischungen dieser Alkohole in beliebigen Verhältnissen. Der Restanteil des Gemisches setzt sich zum einen aus dem Reaktionspartner Wasser zusammen, zum anderen können weitere organische Lösemittel vorhanden sein.

Der Vorteil bei der Verwendung überwiegend organischer Lösemittel bei Schritt (c) besteht in der sehr guten Löslichkeit vieler Silane, insbesondere von Alkoxysilanen, in organischen Lösemitteln. Dadurch können neben hydrophilen Silanen, insbesondere auch hydrophobe Silane verwendet werden. In wässrigen Lösungen hingegen sind viele Silane nicht löslich. Man behilft sich hier mit einer kontrollierten Vorhydrolyse der Silane [US 5,759,255] oder der Synthese von speziellen wasserlöslichen Oligomersystemen [DE 196 39 783]. Vorhydrolysierte Silansysteme sind jedoch nicht sehr lagerungsfähig. Durch weitere Hydrolyse oder Kondensationsprozesse können die Silane weiter vernetzten, oligomerisieren und schließlich für den Zweck der Oberflächenmodifizierung unbrauchbar werden. Wasserlösliche Oligomersysteme schließlich müssen erst aufwendig synthetisiert werden, sind ebenfalls schwieriger zu lagern und sind in der Vielfalt der Variationsmöglichkeiten der organofunktionellen Gruppen beschränkt. Insbesondere sind Alkylsilane mit 10 bis 22 C-Atomen nicht oder nur kaum in Wasser löslich. Hingegen können derartige unpolare Alkylsilane problemlos in den hier verwendeten Lösemitteln und den oben genannten Lösemittelgemischen gelöst werden, was sich vorteilhaft auf die Schichtbildung an der Pigmentoberfläche auswirkt. Außerdem ist ein effektiver Materialeinsatz der relativ teuren Silane möglich.

Aminosilane hingegen sind zwar i.d.R. in Wasser löslich, werden jedoch autokatalytisch hydrolysiert und kondensieren zu oligomeren und polymeren Systemen. Sie besitzen daher in Wasser nur eine eingeschränkte Lagerungsstabilität.

Durch die größere Anzahl als Oberflächenmodifizierungsmittel zur Verfügung stehender Silane kann man die Oberflächeneigenschaften der erfindungsgemäßen Perlglanzpigmente in variabelster Weise an die verschiedenen Lacksysteme anpassen. Hingegen ist man bei vorhydrolysierten Silanen und insbesondere bei wasserlöslichen Silanoligomeren, die in wäßriger Lösung aufgebracht werden, auf kurzkettige aliphatische oder aromatische Reste bis maximal 8 C-Atome beschränkt.

Bei dem hier beschriebenen Verfahren wird die organisch-chemische Oberflächenmodifizierung auf die SiO₂-Schicht aufgebracht. Hierzu wird Schritt (c) dann durchgeführt, wenn sich das Tetraalkoxysilan zu wenigstens 85%, bevorzugt zu wenigstens 90% und besonders bevorzugt zu wenigstens 95% umgesetzt hat. Eine Mischfällung mit noch nicht abgeschiedenen Metallverbindungen wie beispielsweise Metallhydroxidenist nicht nötig und nicht vorteilhaft.

Bei einer weiteren Variante des erfindungsgemäßen Verfahrens kann eine SiO₂-Beschichtung zunächst auch in wässrigem Milieu aus Silikatlösungen erfolgen, wie beispielsweise in der DE 2106613, Beispiel 1 bzw. in Beispiel 1 der DE 4207723, sowie in Beispiel 1 der EP 649886 B1 bzw. in der EP 0141174, Zeilen 30-37 beschrieben. Anschließend kann ein Kalzinierungsschritt durchgeführt werden.

Die Fällung der Oberflächenmodifizierungsmittel jedoch soll bevorzugt in einem überwiegend organischen Lösemittelgemisch erfolgen. Gegebenenfalls kann vor der Fällung der Oberflächenmodifizierungsmittel auch noch eine weitere SiO₂-Schicht durch Sol-Gel-Prozeß aufgebracht werden.

Bevorzugt wird jedoch das vorstehend beschriebene Eintopfverfahren unter Verwendung von Sol-Gel-Verfahren in überwiegend organischem Lösemittelgemisch verwendet.

Die erfindungsgemäßen Perlglanzpigmente werden vorzugsweise in Lacken, Pulverlacken, Druckfarben, Kunststoffen, Coatings und kosmetischen Zubereitungen verwendet.

Insbesondere finden die erfindungsgemäßen Perlglanzpigmente Verwendung als wetterstabile Perlglanzpigmente in Automobillacken sowie in Pulverlacken und Coatings für Außen- und Fassadenanwendungen.

Die der Erfindung zugrundeliegende Aufgabe wird ferner durch einen Gegenstand mit einer Beschichtung, die Perlglanzpigment gemäß einem der Ansprüche 1 bis 12 enthält, gelöst. Gemäß einer bevorzugten Weiterbildung der Erfindung ist der Gegenstand eine Fahrzeugkarosserie, vorzugsweise Kraftfahrzeugkarosserie, oder eine Fassade, beispielsweise ein Fassadenelement.
Die folgenden Beispiele sollen die Erfindung näher beschreiben, ohne sie jedoch zu beschränken:

### Beispiel 1:

100g kommerziell erhältliches, blaues Perlglanzpigment auf Basis von TiO₂ beschichtetem Glimmer der Feinheit 5 - 25 µm (PHOENIX PX 2261, Fa. Eckart) wurden in 300 ml Isopropanol suspendiert und auf Siedetemperatur gebracht. Unter Rühren gab man eine Lösung von 0,45 g Ethylendiamin in 9.5g H₂O hinzu. Danach leitete man über einen Zeitraum von 2 h 17,5 g Tetraethoxysilan in 15 g Isopropanol mit einer Dosierpumpe (Ismatec) kontinuierlich ein. Anschließend ließ man die Suspension noch 6 h lang weiterreagieren. Dann gab man 0,6 g Dynasylan AMEO und 1,7 g Dynasylan 9116 hinzu und ließ langsam abkühlen. Das Gemisch wurde über Nacht bei Raumtemperatur gerührt und am nächsten Tag abgenutscht. Der Pigmentfilterkuchen wurde anschließend 6 h lang bei 100°C unter Vakuum getrocknet. Das Pigment hatte einen theoretischen SiO₂- Gehalt von 4,2 Gew.-%.

### Beispiel 2:

Wie Beispiel 1, nur wurden als unbeschichtetes Perlglanzpigment 100 g blaues Perlglanz der Feinheit 10 - 40 µm (PHOENIX PX 1261, Fa. Eckart) verwendet. Die Nachbeschichtung wurde mit 0,5 g Dynasylan AMEO und 1,4 g Dynasylan 9116 durchgeführt.
Das Pigment hatte einen theoretischen SiO₂- Gehalt von 4,2 Gew.-%.

### Vergleichsbeispiel 3:

Kommerziell erhältliches Exterior CFS Mearlin Super Blue 6303Z (10 - 40 µm) der Fa. Engelhard, USA.

### Vergleichsbeispiel 4:

Hergestellt wie Beispiel 1, jedoch wurde kein Aminosilan eingesetzt.Die Nachbeschichtung erfolgte nur mit 1,7 g Dynasylan 9116.

Die erfindungsgemäßen Beispiele und die Vergleichsbeispiele wurden verschiedenen Tests zur Wetterstabilität und zur UV-Stabilität unterzogen. Nachfolgend sind die Testmethoden beschrieben und die Ergebnisse aufgeführt.

### A Schwitzwassertest

Einige Pigmentproben wurden in ein Wasserlacksystem eingearbeitet und die Prüfapplikationen durch Spritzlackierung hergestellt. Der Basislack wurde mit einem handelsüblichen 1 K-Klarlack überlackiert und anschließend eingebrannt. Diese Applikationen wurden nach DIN 50 017 (Kondenswasser-Konstantklimate) geprüft. Die Haftfestigkeit wurde mittels Gitterschnitt nach DIN EN ISO 2409 sofort nach Testende und eine Stunde später im Vergleich zur unbelasteten Probe geprüft. Hierbei bedeutet Gt 0 keine Veränderung und Gt 5 eine sehr starke Veränderung. Das Quellverhalten wurde unmittelbar nach Schwitzwasserbelastung in Anlehnung an die DIN 53230 visuell beurteilt. Hierbei bedeutet die Kennzahl 0: keine Veränderung und die Kennzahl 5: sehr starke Veränderung.
Der Blasengrad wurde visuell nach DIN 53209 beurteilt. Auch hier reicht die relative Bewertungsskala von 0 ("sehr gut") bis 5 ("sehr schlecht"). Mit "m" bezeichnet man die Häufigkeit und mit "g" die Größe der Blasen.
Schließlich wurde der DOI (distinctness of image) visuell beurteilt. Er kann sich im wesentlichen aufgrund der Quellvorgänge durch Wassereinlagerung verändern.

**Tab. 1: Schwitzwasser und Gitterschnittprüfungen**

| **Probe** | **Gitterschnitt** | | | **Blasengrad** | **Quellung** | **DOI** | |
|---|---|---|---|---|---|---|---|
| | 0-Muster | 0 h | 1h | | | 0 h | 1 h |
| Beispiel 1 | Gt 0 | Gt 0 | Gt 0 | m1/g1 | 2 | 2 | 2 |
| Beispiel 2 | Gt 0 | Gt 0 | Gt 0 | m1/g1 | 2 | 2 | 2 |
| Vergl. Beispiel 3 | Gt 0 | Gt 0 | Gt 0 | m1/g1 | 2 | 2 | 1 |
| Vergl. Beispiel 4 | Gt 1 | Gt 4 | Gt 2 | m2/g3 | 2 | 2- | 2 |

Die erfindungsgemäßen Beispiele 1 und 2 sind mit dem Vergleichsbeispiel 3 aus dem Stand der Technik in jeder Hinsicht vergleichbar und bestehen den Schwitzwassertest. Das Vergleichsbeispiel 4, bei dem die Nachbeschichtung lediglich aus einem Alkylsilan (16 C-Atome) ohne eine funktionelle Gruppe, die an das Lacksystem anbindet, bestand, ist jedoch hinsichtlich seiner Haftfestigkeit im Gitterschnitt deutlich schlechter und besteht den Test nicht.
Daher wurden mit dieser Probe auch keine weiteren Belastungstests wie ein WOM-Test durchgeführt.

### B WOM-Test

Die Pigmentproben wurden in ein Wasserlacksystem eingearbeitet und die Prüfapplikationen durch Spritzlackierung hergestellt. Der Basislack wurde mit einem handelsüblichen Klarlack überlackiert und anschließend eingebrannt. Die beschleunigte Bewitterungsprüfung erfolgte nach SAE-J 1960 in einem Atlas Ci-65 A Xeno-Testgerät mit wassergekühltem 6.5 kW Xenonstrahler.
Die Bestimmung der ΔE-Werte sowie die Einstufung nach der Grauskala erfolgte jeweils relativ zur entsprechenden unbelasteten Probe.

WOM-Tests werden allgemein von allen Schnellbewitterungsmethoden als die diejenige anerkannt, die die besten Korrelationen zu Florida-Bewitterungstests aufweisen. Ein bestandener Floridatest ist beispielsweise Voraussetzung für die Freigabe einer Beschichtung für den Automobilbereich. 4000 h WOM-Test entsprechen dabei in etwa den geforderten zwei Jahren Floridatest.

### C UV-Beständigkeit an Rakelabzügen

Dieser Test wurde in Anlehnung an den in der EP 0 870 730 beschrieben UV-Test zur Bestimmung der UV-Aktivität von TiO₂-Pigmenten als ein Schnelltest zur photochemischen Aktivität durchgeführt.
Hierzu wurden 1.0 g des Perlglanzpigmentes in 9.0 g eines doppelbindungsreichen melaminhaltigen Lackes eindispergiert. Es wurden Rakelabzüge auf kartoniertem Papier angefertigt und diese bei Raumtemperatur getrocknet. Die Rakelabzüge wurden geteilt und jeweils einer der beiden Abschnitte als unbelastetes Vergleichsmuster im Dunkeln gelagert. Anschließend wurden die Proben 150 min lang in einem QUV-Gerät der Fa. Q-Panel mit UV-haltigem Licht (UVA-340 Lampe, Bestrahlungsstärke 1,0 W/m²/nm) bestrahlt. Unmittelbar nach dem Testende wurden mit einem Farbmessgerät CM-508i der Fa. Minolta Farbwerte der belasteten Prüflinge relativ zum jeweiligen Rückstellmuster ermittelt. Die resultierenden ΔE*-Werte sind, nach der Hunter-L*a*b*-Formel berechnet, in Tab. 2 dargestellt.

Im Test wird im Wesentlichen eine graublaue Verfärbung der TiO₂-Schicht des Perlglanzpigmentes in den Rakelabzügen aufgrund von unter UV-Lichteinfluß gebildeten Ti(III)-Zentren beobachtet. Bedingung hierfür ist, dass das Elektronenloch das TiO₂ räumlich verlassen hat und - etwa durch Reaktion mit olefinischen Doppelbindungen des Bindemittels - nicht unmittelbar wieder mit dem verbleibenden Elektron rekombinieren kann. Da eine melaminhaltige Lackschicht die Diffusion von Wasser (dampf) und Sauerstoff an die Pigmentoberfläche signifikant verlangsamt, findet eine Reoxidation der Titan (III)-Zentren deutlich verzögert statt, so dass die Vergrauung gemessen und der ΔE*-Wert als Maß für die UV-Stabilität der Pigmente herangezogen werden kann. Ein größer ΔE*-Zahlenwert der belasteten Probe relativ zum unbelasteten Rückstellmuster bedeutet somit eine geringere UV-Stabilität des untersuchten Pigments.

Bei Verwendung dieses Tests bei den erfindungsgemäßen Beispielen ist zu unterscheiden, ob Proben mit oder ohne organische Oberflächenmodifizierung (OFM) eingesetzt werden.

Mit einer organischen Oberflächenmodifizierung wird die Pigmentoberfläche zumindest teilweise vom reaktiven, ungesättigten Melaminsystem isoliert. Daher kann die zur Bildung der farbgebenden Ti(III)-Zentren zwingend erforderliche Redox-Reaktion nicht mit der gleichen Effizienz und Geschwindigkeit stattfinden wie im zuerst geschilderten Fall. Somit wird bei organisch oberflächenmodifizierten Pigmenten zwangsläufig eine weitaus geringere Verfärbung ermittelt. Dies bedeutet aber nicht, dass die UV-katalytische Aktivität in diesem Fall niedrig ist. Stets sind daher jedoch die ΔE*-Werte für ein nicht organisch modifiziertes erfindungsgemäßes Perlglanzpigment etwas höher als für die an der Oberfläche nachbehandelten Proben.

**Tabelle 2: WOM- und UV-Rakeltestergebnisse**

| | **WOM-Test** | | **UV-Test** | |
|---|---|---|---|---|
| **Probe** | **ΔE*** | **Grauskala** | **ΔE* (ohne OFM)** | **ΔE* (mit OFM)** |
| Beispiel 1 | | | 2,1 1 | 1,0 |
| 500h | 0,2 | 5 | | |
| 1000h | 0,2 | 5 | | |
| 2000h | 0,3 | 5 | | |
| 3000h | 0,3 | 4 - 5 | | |
| 4000h | 0,4 | 4 - 5 | | |
| Beispiel 2 | | | 2,6 | 1,4 |
| 500h | 0,1 | 5 | | |
| 1000h | 0,2 | 5 | | |
| 2000h | 0,2 | 5 | | |
| 3000h | 0,2 | 4 - 5 | | |
| 4000h | 0,4 | 4 - 5 | | |
| Vergleichsbeispiel 3 (Exterior CFS Mearlin Super Blue 6303Z) | | | - | 2,3 +/- 0,3 |
| 500h | 0,4 | 5 | | |
| 1000h | 0,5 | 5 | | |
| 2000h | 0,8 | 4 - 5 | | |
| 3000h | 0,8 | 4 - 5 | | |
| 4000h | 1,0 | 4 | | |

| | | | | |
|---|---|---|---|---|
| OFM: Oberflächenmodifizierung | | | | |

Vergleicht man die Farbänderungen ΔE* des WOM-Testes der blauen Pigmente der erfindungsgemäßen Beispiele 1 und 2 mit jenem den Stand der Technik repräsentierenden Resultate des Vergleichsbeispiels 3, so erhält man niedrigere Werte und daher sogar bessere Wetterbeständigkeiten. Ähnliches gilt für die UV-Stabilitäten, die im Rakeltest ermittelt werden. Diese Ergebnisse erscheinen insbesondere bemerkenswert, da hier nur eine einzige oxidische Schicht zur Stabilisierung der Perlglanzpigmente verwendet wurde.

Die erfindungsgemäßen Perlglanzpigmente vermögen daher die Wetter- und UV-Stabilität mit nur einer einzigen SiO₂-Schicht gegenüber Vergleichsbeispielen aus dem Stand der Technik zu verbessern.

### Beispiel 5:

Beispiel 5 wurde in Entsprechung zu Beispiel 1 durchgeführt, wobei jedoch als Perlglanzpigment PHOENIX PX 1001, ein silberweißes Perlglanzpigment mit einer Partikelgröße von 10 bis 40 µm, der Fa. Eckart verwendet wurde.

Nachfolgend wurden die Glanzeigenschaften von gemäß Beispiel 1 mit einer SiO₂-Schicht beschichteten PHOENIX PX 1001 Perlglanzpigmenten mit nichtnachbeschichteten PHOENIX PX 1001 Perlglanzpigmenten verglichen.

Hierzu wurden die PHOENIX PX 1001 Perlglanzpigmente mit bzw. ohne zusätzliche SiO₂-Beschichtung in ein handelsübliches NC-Lacksystem in einer Pigmentierungshöhe von 6 Gew.-%, bezogen auf das Gesamtgewicht des Lackes, eingearbeitet. Von den pigmentierten NC-Lacksystemen wurden Rakelabzüge mit einer Naßfilmdicke von 36 µm angefertigt. Die Rakelabzüge wurden dabei auf Prüfkarten mit schwarzer und weißer Fläche, erhältlich bei der Fa. BYK-Gardner, Deutschland, aufgebracht und für 30 Minuten bei 25 °C getrocknet.

Die Glanzmessungen wurden mit einem micro-TRI-Gloss µ - Gerät der Fa. BYK-Gardner gemäß Herstellerangaben bei einer Meßgeometrie von 60°, bezogen auf die Vertikale , durchgeführt. Eine Meßgeometrie von 60° ist für den sogenannten "Mittelglanz" im Bereich von 10 bis 70 Glanzpunkten geeignet, wobei ein höherer Zahlenwert bei den Glanzpunkten bei einem höheren Glanz gemessen wird. Die Meßergebnisse sind in Tabelle 3 angegeben und stellen Mittelwerte aus jeweils fünf Einzelmessungen dar, wobei die Standardabweichung in der Klammer jeweils angegeben ist.

**Tabelle 3: Glanzwerte von PHOENIX PX 1001 mit (Beispiel 5) und ohne SiO₂-Beschichtung**

| **Probe** | **60°-Glanz auf weißem Untergrund** | **60°-Glanz auf schwarzem Untergrund** |
|---|---|---|
| PHOENIX PX 1001 mit SiO₂- Beschichtung und organischer Nachbeschichtung (Bsp. 5) | 51,4 (± 0,3) | 49,1 (± 0,4) |
| PHOENIX PX 1001 ohne SiO₂- Beschichtung und ohne organische Nachbeschichtung | 51,5 (± 0,4) | 49,8 (± 0,4) |

Tabelle 3 ist zu entnehmen, daß die Beschichtung von Perlglanzpigmenten mit SiO₂, das einen niedrigen Brechungsindex aufweist, überraschenderweise zu keiner signifikanten Verschlechterung des Glanzes führt. Im Hinblick auf den niedrigen Brechungsindex von SiO₂ wäre zu erwarten gewesen, daß die mit SiO₂ beschichteten Perlglanzpigmente deutlich geringere Glanzeigenschaften aufweisen als die nicht mit einer Si02-Beschichtung versehenen PHOENIX PX 1001-Pigmente.

## Patentansprüche

1. Perlglanzpigment mit Metalloxid-haltigem, plättchenförmigen Substrat und Schutzschicht, wobei das Metalloxid einen Brechungsindex von größer als 1,8 hat
**dadurch gekennzeichnet,**
**daß** die Schutzschicht aus einer organisch-chemisch oberflächenmodifizierten SiO₂-Schicht besteht, wobei die organisch-chemische Oberflächenmodifizierung auf der SiO₂-Schicht aufgebracht ist, wobei die SiO₂-Schicht mit mehreren organofunktionellen Silanen, oberflächenmodifiziert ist, wobei die mehreren organofunktionellen Silane aus ein von Silan mit wenigstens einer funktionellen Bindungsgruppe und aus ein von Silan ohne funktionelle Bindungsgruppe bestehen und wobei das plättchenförmige Substrat mit der organisch-chemisch oberflächenmodifizierten SiO₂ - Schicht umhüllt ist und aus der Gruppe, die aus
- TiO₂ und/oder Eisenoxid beschichteten Glimmerplättchen,
- TiO₂ und/oder Eisenoxid beschichteten Glasplättchen,
- TiO₂ und/oder Eisenoxid beschichteten Aluminiumoxidplättchen,
- TiO₂ und/oder Eisenoxid beschichteten SiO₂-Plättchen,
- Bismutoxychloridplättchen,
- reinen TiO₂-Plättchen und
Mischungen davon besteht, ausgewählt wird.

2. Perlglanzpigment nach Anspruch 1,
**dadurch gekennzeichnet,**
**daß** der SiO₂-Gehalt des Pigmentes 0,5 bis 10 Gew.-%, bezogen auf das Gesamtgewicht des Pigmentes, beträgt.

3. Perlglanzpigment nach Anspruch 1 oder 2,
**dadurch gekennzeichnet,**
**daß** die Oberflächenmodifizierungsmittel vor dem Aufbringen auf die SiO₂-Schicht in monomerer, oligomerer oder polymerer Form vorliegen.

4. Perlglanzpigment nach Anspruch 1, 2 oder 3,
**dadurch gekennzeichnet,**
**daß** die Oberflächenmodifizierungsmittel vor dem Aufbringen auf die SiO₂-Schicht in monomerer Form vorliegen.

5. Perlglanzpigment nach Anspruch 1,
**dadurch gekennzeichnet,**
**daß** die wenigstens eine funktionelle Bindungsgruppe aus der Gruppe, die aus Acrylat-, Methacrylat-, Vinyl-, Amino-, Cyanat-, Isocyanat-, Epoxy-, Hydroxy-, Thiol-, Ureido-, Carboxylgruppen und Mischungen davon besteht, ausgewählt wird.

6. Perlglanzpigment nach Anspruch 1,
**dadurch gekennzeichnet,**
**daß** das wenigstens eine Silan ohne funktionelle Bindungsgruppe ein in Wasser unlösliches oder schlecht lösliches organofunktionelles Silan ist.

7. Perlglanzpigment nach Anspruch 1,
**dadurch gekennzeichnet,**
**daß** das Silan ohne funktionelle Bindungsgruppe ein Alkylsilan ist, das vorzugsweise unter Verwendung eines Alkylsilans mit der Formel R_{(4-z)}Si(X)_{z} aufgebracht ist, wobei R eine substituierte oder unsubstituierte, unverzweigte oder verzweigte Alkylkette mit 10 bis 22 C-Atomen ist, X für eine Halogen- und/oder Alkoxygruppen steht und z eine ganze Zahl von 1 bis 3 ist.

8. Perlglanzpigment nach Anspruch 1,
**dadurch gekennzeichnet,**
**daß** das Silan ohne funktionelle Bindungsgruppe die Strukturformel (II)
(R¹-X-[A-Y]ₙ-B)_{(4-z)}Si(OR²)_{z} (II)
aufweist, wobei
- n = 1 bis 100 ist,
- z eine ganze Zahl von 1 bis 3 ist,
- R¹ für gerad- oder verzweigtkettiges Alkyl mit 1 bis 12 Kohlenstoffatomen, das mit Halogenen substituiert sein kann; Aryl mit 6 bis 12 C-Atomen; oder Aryl mit 6 bis 12 C-Atomen, das mit Alkyl mit 1 bis 6 Kohlenstoffatomen und/oder mit Halogenen substituiert sein kann; steht,
- R² für gerad- oder verzweigtkettiges Alkyl mit 1 bis 6 Kohlenstoffatomen steht
- A und B unabhängig voneinander für eine zweiwertige Gruppe, die aus gerad- oder verzweigtkettigem Alkylen mit 1 bis 12 Kohlenstoffatomen; Arylen mit 6_bis 12 C-Atomen; oder Arylen mit 6 bis 12 C-Atomen, das mit Alkyl mit 1 bis 6 Kohlenstoffatomen und/oder mit Halogenen substituiert sein kann; besteht, stehen,
- X und Y unabhängig voneinander für O oder S stehen.

9. Perlglanzpigment nach Anspruch 8,
**dadurch gekennzeichnet,**
**daß** R¹ und R² unabhängig voneinander aus der Gruppe ausgewählt werden, die aus Methyl, Ethyl, n-Propyl, iso-Propyl, n-Butyl, iso-Butyl, tert.-Butyl, Phenyl, Biphenyl, Napthyl und Mischungen davon besteht.

10. Perlglanzpigment nach einem der Ansprüche 8 oder 9,
**dadurch gekennzeichnet,**
**daß** A und B unabhängig voneinander aus der Gruppe ausgewählt werden, die aus Ethylen, Propylen, 1-Butylen, 2-Butylen, Phenylen, Phenylen, das mit Alkyl mit 1 bis 6 C-Atomen substituiert ist, und Mischungen davon besteht.

11. Perlglanzpigment nach einem der Ansprüche 8 bis 10,
**dadurch gekennzeichnet,**
**daß** die Silane in reiner Form mit definiertem n oder in Mischungen mit verschiedenen n vorliegen können.

12. Perlglanzpigment nach einem der vorhergehenden Ansprüchen,
**dadurch gekennzeichnet,**
**daß** das Metalloxid TiO₂ ist oder enthält.

13. Verfahren zur Herstellung eines Perlglanzpigmentes nach einem der Ansprüche 1 bis 12, das die folgenden Schritte umfasst:
(a) Suspendieren von Metalloxid-haltigem, plättchenförmigen Substrat in einer Flüssigphase, wobei das Metalloxid einen Brechungsindex von größer als 1,8 aufweist,
(b) Aufbringen einer SiO₂-Schicht auf das plättchenförmige Substrat,
(c) Modifizieren der Oberfläche der SiO₂-Schicht mit Silanen.

14. Verfahren nach Anspruch 13,
**dadurch gekennzeichnet,**
**daß** in Schritt (a) die Flüssigphase vorwiegend ein organisches Lösemittelgemisch, das vorzugsweise weniger als 50 Gew-% Wasser enthält, ist.

15. Verfahren nach Anspruch 13 oder 14,
**dadurch gekennzeichnet,**
**daß** in Schritt (b) die SiO₂-Schicht unter Zugabe von Tetraalkoxysilan zu der in Schritt (a) bereitgestellten Suspension unter optionaler Zugabe von Wasser aufgebracht wird.

16. Verfahren nach Anspruch 15,
**dadurch gekennzeichnet,**
**daß** das Tetraalkoxysilan aus der Gruppe ausgewählt wird, die aus Tetramethoxysilan, Tetraethoxysilan, Tetraisopropoxysilan, Tetrabutoxysilan und Mischungen davon besteht.

17. Verfahren nach einem der Ansprüche 13 bis 16,
**dadurch gekennzeichnet,**
**daß** in Schritt (b) zusätzlich stickstoffhaltige Basen zugegeben werden

18. Verfahren nach einem der Ansprüche 13 bis 17,
**dadurch gekennzeichnet,**
**daß** in Schritt (c) die SiO₂-Schicht in einer Flüssigphase mit einem überwiegenden Anteil an organischem Lösemittel organisch-chemisch oberflächenmodifiziert wird.

19. Verfahren nach Anspruch 15,
**dadurch gekennzeichnet,**
**daß** in Schritt (a) die plättchenförmigen Substrate in Wasser oder in überwiegend wässrigem Medium suspendiert werden und in Schritt (b) die SiO₂-Schicht unter Verwendung von wässrigen Silikatlösungen wie Wasserglas aufgebracht wird.

20. Verfahren nach Anspruch 19,
**dadurch gekennzeichnet,**
**daß** die mit einer SiO₂-Schicht versehenen plättchenförmigen Substrate in einer Flüssigphase mit einem überwiegenden Anteil an organischem Lösemittel aufgenommen und nachfolgend organisch-chemisch oberflächenmodifiziert werden.

21. Verfahren nach einem der vorhergehenden Ansprüche 13 bis 18 und 20
**dadurch gekennzeichnet,**
**daß** das organische Lösemittel Essigester, Alkohole, wie Methanol, Ethanol, n-Propanol, iso-Propanol, n-Butanol, 2-Methylpropanol, 2-Methoxypropanol, Butylglycol oder Mischungen davon ist.

22. Verwendung eines Perlglanzpigmentes nach einem der Ansprüche 1 bis 12 in Coatings, Lacken, Pulverlacken, Druckfarben, Kunststoffen und kosmetischen Zubereitungen.

23. Verwendung eines Perlglanzpigmentes nach einem der Ansprüche 1 bis 12 in bewitterungsstabilen Automobillacken sowie Pulverlacken und Coatings für bewitterungsstabile Außen- und Fassadenanwendungen.

24. Gegenstand,
**dadurch gekennzeichnet,**
**daß** der Gegenstand mit einer Beschichtung, die Perlglanzpigment gemäß einem der Ansprüche 1 bis 12 enthält, versehen ist.

25. Gegenstand nach Anspruch 24,
**dadurch gekennzeichnet,**
**daß** der Gegenstand eine Fahrzeugkarosserie oder eine Fassade ist.

## Claims

1. Pearlescent pigment comprising platelet-shaped substrate, comprising metal oxide, and protective layer, said metal oxide having a refractive index of more than 1.8,
**characterised in that**
the protective layer is composed of an organic-chemically surface modified SiO₂ layer, the organic chemical surface modification being applied on the SiO₂ layer, the SiO₂ layer is surface modified with several organofunctional silanes, the several organofunctional silanes are composed of at least one silane having at least one functional bond group and a silane without a functional bond group and the platelet-shaped substrate is coated with the organic-chemically modified Si02 layer and is selected from the group consisting of
- TiO₂ and/or iron oxide coated mica flakes,
- TiO₂ and/or iron oxide coated glass flakes,
- TiO₂ and/or iron oxide coated alumina flakes,
- TiO₂ and/or iron oxide coated SiO₂ flakes,
- bismuth oxychloride flakes,
- pure TiO₂ flakes, and
mixtures thereof.

2. Pearlescent pigment as claimed in claim 1,
**characterised in that**
the SiO₂ content of the pigment is 0.5% to 10% by weight, based on the total weight of the pigment.

3. Pearlescent pigment as claimed in claim 1 or 2,
**characterised in that**
the surface modifiers prior to application to the SiO₂ layer are in monomeric, oligomeric or polymeric form.

4. Pearlescent pigment as claimed in claim 1, 2 or 3,
**characterised in that**
the surface modifiers prior to application to the SiO₂ layer are in monomeric form.

5. Pearlescent pigment as claimed in claim 1,
**characterised in that**
the at least one functional bond group is selected from the group consisting of acrylate, methacrylate, vinyl, amino, cyanate, isocyanate, epoxy, hydroxyl, thiol, ureido, and carboxyl groups, and mixtures thereof.

6. Pearlescent pigment as claimed in claim 1,
**characterised in that**
the silane without a functional bond group is an organofunctional silane which is poorly soluble or insoluble in water.

7. Pearlescent pigment as claimed in claim 1,
**characterised in that**
the silane without a functional bond group is an alkylsilane applied preferably using an alkyl-silane having the formula R_{(4-z)}Si(X)_{z} where R is a substituted or unsubstituted, unbranched or branched alkyl chain having 10 to 22 carbon atoms, X is a halogen and/or alkoxy groups, and z is an integer from 1 to 3.

8. Pearlescent pigment as claimed in claim 1,
**characterised in that**
the silane without a functional bond group has the structural formula (II)
(R¹-X-[A-Y]ₙ-B) _{(4-z)} Si(OR²)_{z} (II)
where
- n = 1 to 100,
- z is an integer from 1 to 3,
- R¹ is straight- or branched-chain alkyl having 1 to 12 carbon atoms, which may be substituted by halogens; is aryl having 6 to 12 carbon atoms; or is aryl having 6 to 12 carbon atoms, which may be substituted by alkyl having 1 to 6 carbon atoms and/or by halogens;
- R² is straight- or branched-chain alkyl having 1 to 6 carbon atoms;
- A and B independently of one another are a divalent group composed of straight- or branched-chain alkylene having 1 to 12 carbon atoms; arylene having 6 to 12 carbon atoms; or arylene having 6 to 12 carbon atoms, which may be substituted by alkyl having 1 to 6 carbon atoms and/or by halogens; and
- X and Y independently of one another are 0 or S.

9. Pearlescent pigment as claimed in claim 8,
**characterised in that**
R¹ and R² are selected independently of one another from the group consisting of methyl, ethyl, n-propyl, isopropyl, n-butyl, isobutyl, tert-butyl, phenyl, biphenyl, naphthyl, and mixtures thereof.

10. Pearlescent pigment as claimed in one of claims 8 or 9,
**characterised in that**
A and B are selected independently of one another from the group consisting of ethylene, propylene, 1-butylene, 2-butylene, phenylene, phenylene substituted by alkyl having 1 to 6 carbon atoms, and mixtures thereof.

11. Pearlescent pigment as claimed in one of claims 8 to 10,
**characterised in that**
the silanes may be present in pure form with defined n or in mixtures with different n.

12. Pearlescent pigment as claimed in any one of the preceding claims,
**characterised in that**
the metal oxide is or comprises TiO₂.

13. Process for preparing a pearlescent pigment as claimed in any one of claims 1 to 12, comprising the following steps:
(a) suspending platelet-shaped substrate comprising metal oxide in a liquid phase, said metal oxide having a refractive index of more than 1.8,
(b) applying an SiO₂ layer to the platelet-shaped substrate, and
(c) modifying the surface of the SiO₂ layer with silanes.

14. Process as claimed in claim 13,
**characterised in that**
the liquid phase in step (a) is predominantly an organic solvent mixture containing preferably less than 50 % by weight of water.

15. Process as claimed in claim 13 or 14,
**characterised in that**
the SiO₂ layer in step (b) is applied with addition of tetraalkoxysilane to the suspension provided in step (a), and with optional addition of water.

16. Process as claimed in claim 15,
**characterised in that**
the tetraalkoxysilane is selected from the group consisting of tetramethoxysilane, tetraethoxysilane, tetraisopropoxysilane, tetrabutoxysilane, and mixtures thereof.

17. Process as claimed in any one of claims 13 to 16,
**characterised in that**
nitrogen-containing bases are additionally added in step (b).

18. Process as claimed in any one of claims 13 to 17, **characterised in that**
the SiO₂ layer in step (c) is organic-chemically surface modified in a liquid phase having a predominant fraction of organic solvent.

19. Process as claimed in claim 13,
**characterised in that**
the platelet-shaped substrates in step (a) are suspended in water or in predominantly aqueous medium and in step (b) the SiO₂ layer is applied using aqueous silicate solutions such as waterglass.

20. Process as claimed in claim 19,
**characterised in that**
the platelet-shaped substrates provided with an SiO₂ layer are taken up in a liquid phase having a predominant fraction of organic solvent and are subsequently subjected to organic chemical surface modification.

21. Process as claimed in any one of claims 13 to 18 and 20 above,
**characterized in that**
the organic solvent is ethyl acetate, alcohols, such as methanol, ethanol, n-propanol, isopropanol, n-butanol, 2-methylpropanol, 2-methoxypropanol or butyl glycol, or mixtures thereof.

22. Use of a pearlescent pigment as claimed in any one of claims 1 to 12 in coatings, varnishes, powder coatings, printing inks, plastics or cosmetic preparations.

23. Use of a pearlescent pigment as claimed in any one of Claims 1 to 12 in weathering-stable automotive finishes or in powder coatings or coatings for weathering-stable exterior or architectural facing applications.

24. Article
**characterised in that**
it is provided with a coating comprising pearlescent pigment as claimed in any one of claims 1 to 12.

25. Article as claimed in claim 24,
**characterised in that**
it is a vehicle body or an architectural facing.

## Revendications

1. Pigment à lustre perlé avec un substrat contenant un oxyde métallique en forme de plaquette et une couche de protection, l'oxyde métallique ayant un indice de réfraction supérieur à 1,8,
**caractérisé en ce que**
la couche de protection consiste en une couche de SiO₂ organochimiquement modifiée en surface, la modification organo-chimique étant appliquée sur la couche de SiO₂, la couche de SiO₂ étant modifiée en surface par plusieurs silanes organofonctionnels, lesdits plusieurs silanes organofonctionnels consistant en un silane avec au moins un groupe fonctionnel d'attache et en un silane sans groupe fonctionnel d'attache, et le substrat en forme de plaquettes enveloppé de la couche de SiO₂ organo-chimiquement modifiée en surface étant choisi parmi
- des plaquettes de mica revêtues de TiO₂ et/ou d'oxyde de fer
- des plaquettes de verre revêtues de TiO₂ et/ou d'oxyde de fer
- des plaquettes d'oxyde d'aluminium revêtues de TiO₂ et/ou d'oxyde de fer
- des plaquettes de SiO₂ revêtues de TiO₂ et/ou d'oxyde de fer
- des plaquettes d'oxychlorure de bismuth
- des plaquettes de TiO₂ pur et
des mélanges de celles-ci.

2. Pigment à lustre perlé selon la revendication 1,
**caractérisé en ce que**
la teneur en SiO₂ du pigment est de 0,5 à 10 % en poids, rapporté au poids total du pigment.

3. Pigment à lustre perlé selon la revendication 1 ou 2,
**caractérisé en ce que**
avant l'application de la couche de SiO₂, les moyens de modification de surface sont présents sous forme de monomères, d'oligomères ou de polymères.

4. Pigment à lustre perlé selon la revendication 1, 2 ou 3,
**caractérisé en ce que**
avant l'application de la couche de SiO₂, les moyens de modification de surface sont présents sous forme de monomères.

5. Pigment à lustre perlé selon la revendication 1,
**caractérisé en ce que**
ledit au moins un groupe fonctionnel de liaison est choisi parmi le groupe qui consiste en des groupes acrylates, méthacrylates, vinyles, amino, cyanates, isocyanates, époxydes, hydroxyles, uréido, carboxyles ainsi que des mélanges de ceux-ci.

6. Pigment à lustre perlé selon la revendication 1,
**caractérisé en ce que**
le silane sans groupe fonctionnel de liaison est un silane organofonctionnel insoluble ou peu soluble dans l'eau.

7. Pigment à lustre perlé selon la revendication 1,
**caractérisé en ce que**
le silane sans groupe fonctionnel de liaison est un alkylsilane qui est attaché de préférence moyennant l'utilisation d'un alkylsilane de la formule R_{(4-z)}Si(X)_{z}, dans laquelle R est une chaîne allyle substituée ou non substituée, non ramifiée ou ramifiée, avec 10 à 22 atomes de carbone, X représentant un groupe halogène et/ou alcoxyle et z un nombre entier de 1 à 3.

8. Pigment à lustre perlé selon la revendication 1,
**caractérisé en ce que**
le silane sans groupe fonctionnel de liaison présente la formule structurelle (II)
(R¹-X[A-Y]ₙ-B)_{(4-z)}Si(OR²)_{z} (II)
dans laquelle
- n=1 à 100
- z est un nombre entier de 1 à 3
- R¹ représente un alkyle linéaire ou ramifié avec 1 à 12 atomes de carbone qui peut être substitué par des halogènes, ; un aryle avec 6 à 12 atomes de carbone qui peut être substitué par un alkyl avec 1 à 6 atomes de carbone et/ou par des halogènes,
- R² représente un alkyle linéaire ou ramifié avec 1 à 6 atomes de carbone,
- A et B représentent indépendamment l'un de l'autre un groupe divalent qui consiste en un alkylène linéaire ou ramifié avec 1 à 12 atomes de carbone ; un arylène avec 6 à 12 atomes de carbone ; ou un arylène avec 6 à 12 atomes de carbone qui peut être substitué par un alkyle avec 1 à 6 atomes de carbone et/ou par des halogènes,
- X et Y représentent indépendamment l'un de l'autre un O ou un S.

9. Pigment à lustre perlé selon la revendication 8,
**caractérisé en ce que**
R¹ et R² sont choisis indépendamment l'un de l'autre parmi le groupe qui consiste en le méthyle, l'éthyle, le n-propyle, l'isopropyle, le n-butyle, l'isobutyle, le tert.-butyle, le phényle, le biphényle, le naphtyle et des mélanges de ceux-ci.

10. Pigment à lustre perlé selon l'une quelconque des revendications 8 ou 9,
**caractérisé en ce que**
A et B sont choisis indépendamment l'un de l'autre parmi le groupe qui consiste en l'éthylène, le propylène, le 1-butylène, le 2-butylène, le phénylène, un phénylène qui est substitué par un alkyle avec 1 à 6 atomes de carbone et des mélanges de ceux-ci.

11. Pigment à lustre perlé selon l'une quelconque des revendications 8 à 10,
**caractérisé en ce que**
les silanes peuvent être présents sous forme pure avec un n défini ou en mélange avec des n différents.

12. Pigment à lustre perlé selon l'une quelconque des revendications précédentes,
**caractérisé en ce que**
l'oxyde métallique est du TiO₂ ou en contient.

13. Procédé pour la fabrication d'un pigment à lustre perlé selon l'une quelconque des revendications 1 à 12, qui comprend les étapes suivantes :
(a) mise en suspension d'un substrat contenant des oxydes métalliques, en forme de plaquettes, dans une phase liquide, l'oxyde métallique présentant un indice de réfraction supérieur à 1,8,
(b) application d'une couche de SiO₂ sur le substrat en forme de plaquettes,
(c) modification de la surface de la couche de SiO₂ par des silanes.

14. Procédé selon la revendication 13,
**caractérisé en ce que**
dans l'étape (a), la phase liquide est essentiellement un mélange organique de solvants, qui contient de préférence moins de 50 % en poids d'eau.

15. Procédé selon la revendication 13 ou 14,
**caractérisé en ce que**
dans l'étape (b), la couche de SiO₂ est appliquée moyennant addition de tétraalcoxysilane à la suspension mise à disposition dans l'étape (a), moyennant une addition optionnelle d'eau.

16. Procédé selon la revendication 15,
**caractérisé en ce que**
le tétraalcoxysilane est choisi parmi le groupe qui consiste en le tétraméthoxysilane, le tétraéthoxysilane, le tétraisopropoxysilane, le tétrabutoxysilane et des mélanges de ceux-ci.

17. Procédé selon l'une quelconque des revendications 13 à 16,
**caractérisé en ce que**
dans l'étape (b), des bases azotées sont ajoutées en plus.

18. Procédé selon l'une quelconque des revendications 13 à 17,
**caractérisé en ce que**
dans l'étape (c), la couche de SiO₂ est modifiée organo-chimiquement en surface dans une phase liquide avec une part prépondérante de solvant organique.

19. Procédé selon la revendication 13,
**caractérisé en ce que**
dans l'étape (a), les substrats en forme de plaquettes sont suspendus dans l'eau ou dans un milieu essentiellement aqueux et **en ce que** dans l'étape (b), la couche de SiO₂ est appliquée moyennant l'utilisation de solutions aqueuses de silicates telles du verre soluble.

20. Procédé selon la revendication 19,
**caractérisé en ce que**
les substrats en forme de plaquettes dotés d'une couche de SiO₂ sont placés dans une phase liquide avec une part prépondérante de solvant organique et sont ensuite modifiées organo-chimiquement en surface.

21. Procédé selon l'une quelconque des revendications précédentes 13 à 18 et 20,
**caractérisé en ce que**
le solvant organique est un ester acétique, des alcools tels le méthanol, l'éthanol, le n-propanol, l'isopropanol, le n-butanol, le 2-méthylpropanol, le 2-méthoxypropanol, le butylglycol ou des mélanges de ceux-ci.

22. Utilisation d'un pigment à lustre perlé selon l'une quelconque des revendications 1 à 12 dans des enduits, des peintures, des poudres pour revêtement électrostatique, des encres d'imprimerie, des plastiques et des préparations cosmétiques.

23. Utilisation d'un pigment à lustre perlé selon l'une quelconque des revendications 1 à 12 dans des peintures automobiles résistant aux intempéries, ainsi que dans des poudres pour revêtement électrostatique et des enduits pour des applications résistant aux intempéries, en extérieur et sur des façades.

24. Objet
**caractérisé en ce que**
l'objet est doté d'un revêtement qui contient un pigment à lustre perlé selon l'une quelconque des revendications 1 à 12.

25. Objet selon la revendication 24
**caractérisé en ce que**
l'objet est une carrosserie d'automobile ou une façade.
